# EUROPEAN PATENT APPLICATION

(11) **EP 4 660 869 A1**
(43) Date of publication of application: **10.12.2025**
(21) Application number: 25180982.8
(22) Date of filing: 05.06.2025
(51) Int. Cl.: G06F 30/25, G06F 30/28, G06F 111/10, G06F 113/08

(54) **COMPUTER SYSTEM FOR SIMULATING PHYSICAL PROCESSES USING SURFACE ELEMENTS WITH CURVATURE**

(30) Priority: 06.06.2024 US 202418735292
(71) Applicant: Dassault Systemes Americas Corp., Waltham, MA 02451 (US)
(72) Inventor: CHEN, Hudong, Waltham, 02451 (US); ZHANG, Raoyang, Waltham, 02451 (US); FAN, Hongli, Waltham, 02451 (US)
(74) Representative: Fish & Richardson P.C.

(57) **Abstract**

Systems and methods for digitally simulating a physical process in a three-dimensional CAD model of a simulation space include receiving a digital representation of a simulation space, the digital representation including a three-dimensional CAD model of the simulation space including a lattice structure represented as a plurality of voxels including particles, the simulation space including one or more surfaces sized and oriented independently of the voxels. A plurality of planar facets are determined to represent the one or more surfaces of the simulation space in the lattice structure. One or more curved facets are determined based on the plurality of planar facets; and a physical process is simulated by performing surface interactions between the one or more curved facets and the particles in one or more voxels adjacent the one or more curved facets.

## Description

### BACKGROUND

This description relates to simulating physical processes, e.g., fluid flow.

High Reynolds number flow has been simulated by generating discretized solutions of the Navier-Stokes differential equations by performing high-precision floating point arithmetic operations at each of many discrete spatial locations on variables representing the macroscopic physical quantities (e.g., density, temperature, flow velocity). Another approach replaces the differential equations with what is generally known as lattice gas (or cellular) automata, in which the macroscopic-level simulation provided by solving the Navier-Stokes equations is replaced by a microscopic-level model that performs operations on particles moving between sites on a lattice.

### SUMMARY

Lattice Boltzmann models (LBM) can be used to simulate physical processes such as fluid flows for complex geometries. The surfaces can be represented in the lattice structure through the use of surface elements (e.g., facets, surfels). Using surface elements to represent the geometry has significant advantages over voxel based pointwise formulations for boundary conditions used in other LBMs. The surface element based approach includes exact mass and momentum conservations, exact flux definitions and precise definition of boundary locations on a two dimensional (2D) surface.

Generally, the arbitrarily complex boundaries (e.g., surfaces, geometry) are represented using piecewise planar surface elements. In some situations, the piecewise planar surface elements cause unwanted noise in situations involving extremely complex geometries and/or smooth geometries with high curvature. For example, in an automotive underhood simulation, the complex underhood geometry is discretized resulting in numerous tiny planar surface elements. A single voxel could possibly interact with hundreds of such small surface elements resulting in increased computational cost with no accuracy benefit because the accuracy is mainly determined by the typical size of the local voxel or surface elements, whichever is larger. Many small surface elements can introduce strong surface noise which, for example, can be observed in airfoil simulations close to the leading edge where high local curvatures exist.

This disclosure describes an approach to simulate a physical process using curved surface elements (facets) to represent complex geometries and geometries with high local curvature. A data processing system can receive a digital representation of a simulation space. The digital representation can include a lattice structure represented as a plurality of voxels, where the voxels include particles. The simulation space can include one or more surfaces that are sized and oriented independently of the voxels. For example, the one or more surfaces can represent complex geometry or geometry with high curvature such as airfoils, the underhood geometry of a vehicle, pipes in a cooling system, etc. The data processing system can determine multiple planar surface elements to represent the one or more surfaces of the simulation space. The data processing system can determine one or more curved surface elements based on the multiple planar elements. For example, the data processing system can combine multiple planar surface elements into one curved surface element. The data processing system can simulate a physical process by performing surface interactions between the particles in the voxels and the curved surface elements.

In an example implementation, a computer system for digitally simulating a physical process in a three-dimensional computer-aided design (CAD) model of a simulation space includes one or more processors; and a memory including a mesh preparation engine for generating and storing a digital representation of a simulation space, the digital representation including a three-dimensional CAD model of the simulation space including a mesh represented as a plurality of voxels including particles, the simulation space comprising one or more surfaces sized and oriented independently of the voxels; and a simulation engine for reading, from the mesh preparation engine, the digital representation of the simulation space including the mesh, with the simulation engine storing instructions for simulating a physical process, the instructions, when executed by the one or more processors, cause the one or more processors to perform operations including reading, from the mesh preparation engine, the digital representation of the simulation space including the three-dimensional CAD model of the simulation space including the mesh; determining a plurality of planar facets to represent the one or more surfaces of the simulation space in the mesh; determining one or more curved facets in the mesh based on the plurality of planar facets in the mesh; and digitally simulating a physical process by performing surface interactions between the one or more curved facets in the mesh and the particles in one or more voxels in the mesh adjacent the one or more curved facets in the mesh.

In another example implementation, a method implemented by a data processing system for digitally simulating a physical process in a three-dimensional CAD model of a simulation space includes receiving, by a data processing system, a digital representation of a simulation space, the digital representation including a three-dimensional CAD model of the simulation space including a lattice structure represented as a plurality of voxels including particles, the simulation space including one or more surfaces sized and oriented independently of the voxels; determining, by the data processing system, a plurality of planar facets to represent the one or more surfaces of the simulation space in the lattice structure; determining, by the data processing system, one or more curved facets based on the plurality of planar facets; and simulating, by the data processing system, a physical process by performing surface interactions between the one or more curved facets and the particles in one or more voxels adjacent the one or more curved facets.

In another example implementation, one or more non-transitory machine-readable storage devices storing instructions for digitally simulating a physical process in a three-dimensional CAD model of a simulation space, the instructions being executable by one or more processors, to cause performance of operations including receiving a digital representation of a simulation space, the digital representation including a three-dimensional CAD model of the simulation space including a lattice structure represented as a plurality of voxels including particles, the simulation space including one or more surfaces sized and oriented independently of the voxels; determining a plurality of planar facets to represent the one or more surfaces of the simulation space in the lattice structure; determining one or more curved facets based on the plurality of planar facets; and simulating a physical process by performing surface interactions between the one or more curved facets and the particles in one or more voxels adjacent the one or more curved facets.

In an aspect combinable with one, some, or all of the example implementations, the particles include state vectors, each state vector includes a plurality of entries that correspond to particular momentum states of a plurality of possible momentum states.

In another aspect combinable with one, some, or all of the previous aspects, performing the surface interactions includes determining, for the one or more curved facets, an incoming momentum flux based on the state vectors of the particles; and determining, for the one or more curved facets, an outgoing momentum flux based on the incoming momentum flux.

In another aspect combinable with one, some, or all of the previous aspects, determining the outgoing momentum flux includes determining a zero skin friction portion to preserve a tangential momentum flux of the particles; and determining a non-zero skin friction portion representing a surface momentum flux change of the particles based on particle interactions with the one or more curved facets.

In another aspect combinable with one, some, or all of the previous aspects, determining the outgoing momentum flux includes determining a mass correction for the one or more curved facets to conserve mass in the physical process.

In another aspect combinable with one, some, or all of the previous aspects, determining the mass correction includes determining a first portion of the mass correction based on a flat portion of the one or more curved facets; and determining a second portion of the mass correction based on a curved portion of the one or more curved facets.

In another aspect combinable with one, some, or all of the previous aspects, determining the second portion of the mass correction includes determining particles advected from a curved facet with a concave curved portion to the curved facet with the concave curved portion.

In another aspect combinable with one, some, or all of the previous aspects, simulating the physical process by performing surface interactions between the one or more curved facets and the particles in one or more voxels adjacent the one or more curved facets reduces surface noise and improves an accuracy of a simulation around a curved surface.

In another aspect combinable with one, some, or all of the previous aspects, simulating the physical process by performing surface interactions between the one or more curved facets and the particles in one or more voxels adjacent the one or more curved facets reduces the computational complexity of simulating the physical process by reducing a total number of facets representing the one or more surfaces in the lattice structure as compared with simulating the physical process by performing surface interactions between the plurality of planar facets and the particles in one or more voxels adjacent the plurality of planar facets.

Another aspect combinable with one, some, or all of the previous aspects includes reading, from the memory, the plurality of planar facets representing the one or more surface of the simulation space in the mesh; storing, in the memory, the one or more curved facets in the mesh determined based on the plurality of planar facets in the mesh; and storing, in the memory, the results of a digital simulation of a physical process based on performing surface interactions between the one or more curved facets in the mesh and the particles in one or more voxels in the mesh adjacent the one or more curved facets in the mesh.

One or more of the above aspects may provide one or more of the advantages disclosed herein. This approach reduces computational complexity and the computational resources needed to simulate fluid flow around complex geometries and geometries with high curvature by using curved surface elements as compared with approaches using planar surface elements. Using curved surface elements reduces the number of surface elements used to represent a curved surface in a simulation space. This reduction in computational complexity conserves computing resources because less processing power is needed to perform the computation, relative to an amount of processing power needed for more complex computations. This reduction in computational complexity also increases the speed at which a processing device performs the computation. Generally, processing power includes an ability of a computer (or processing device) to process data. The reduction in the number of surface elements reduces memory consumption by the simulation thereby preserving computational resources. This approach improves the accuracy of fluid flow simulations around complex geometry and geometries with high curvature by reducing surface noise in the simulation as compared with approaches using only planar surface elements. This approach preserves exact surface flux (e.g., mass, momentum, and energy conservation) and precise spatial location representation of the fluid properties and surface boundaries in the simulation of fluid flows.

Other features and advantages of the invention will be apparent from the following detailed description of the preferred embodiments, and from the claims.

### BRIEF DESCRIPTION OF THE DRAWINGS

FIG. 1A depicts a system for simulation of fluid flows, which includes a novel surface dynamics conversion.
FIG. 1B depicts a flow chart showing operations for formulation of a Lattice Boltzmann Model simulation.
FIGS. 2A and 2B each illustrate curved facets.
FIGS. 3 and 4 illustrate velocity components of two LBMs represented in Euclidean space (prior art).
FIG. 5 is a flow chart of a procedure followed by a physical process simulation system using corrected computer-aided-design (CAD) drawings.
FIG. 6 is a perspective view of a microblock (prior art).
FIGS. 7A - 7B are illustrations of lattice structures used by the system of FIG. 1 (prior art).
FIGS. 8 and 9 each illustrate variable resolution techniques (prior art).
FIG. 10 illustrates movement of particles (prior art).
FIG. 11 illustrates regions affected by a facet of a surface (prior art).
FIG. 12 illustrates movement of particles from a surface to a surface (prior art).
FIG. 13 is a flow chart of a procedure for performing surface dynamics.
FIG. 14 illustrates fluid flow simulation results for a gravity driven pipe flow using planar surface elements and curved surface elements.
FIGS. 15A-15B illustrate fluid flow simulation results for fluid flow around an airfoil.

The details of one or more embodiments of the invention are set forth in the accompanying drawings and the description below. Other features, objects, and advantages of the invention are apparent from the description and drawings, and from the claims.

### DESCRIPTION

A curved, smooth, two-dimensional (2D) surface can be represented in a digital representation of a simulation space by a set of piecewise-planar facets with polygonal shape. Each facet *α* is tangential to the original smooth surface with a unique surface normal vector **n^{α}** pointing towards the fluid domain. Each facet *α* has a surface area *A^{α}.* Fluid particle interactions between facets and voxels occur based on particle distributions associated with parallelepipeds that extend from the facet in the opposite direction of the fluid particle velocity *cᵢ*, where the parallelepiped has a volume proportional to the area of the facet and the fluid particle velocity. During facet-voxel interactions, a data processing system collects incoming fluid particle distributions for each facet from neighboring voxels via the parallelepipeds corresponding to particle velocities directed toward the facet and that are overlapped with the voxels. Such a gather forms half of a set of particle distributions coming from the fluid side of the facet. The data processing system samples hydrodynamic quantities including mass, momentum and energy (MME) from the voxels abutting the facets. The data processing system can perform surface interactions, e.g., particle collisions on a facet, which obey MME conservation laws based on the collected particle distributions and the sampled hydrodynamic quantities. The data processing system constructs outgoing particle distributions based on the surface interactions while the hydrodynamic fluxes are precisely realized, for example, preserving tangential momentum flux while bouncing back normal momentum flux on a frictionless wall. Finally, the data processing system can advect the outgoing fluid particles back to neighboring voxels via the same overlapped parallelepipeds used during the gather step. This facet based surface formulation can be used, for example, in turbulent fluid flow simulations in broad engineering applications.

This disclosure describes an approach to simulate a physical process using curved surface elements (e.g., curved surfels or curved facets) to represent complex geometries and geometries with high local curvature. A data processing system can receive a digital representation of a simulation space. The digital representation can include a lattice structure represented as a plurality of voxels, where the voxels include particles. The simulation space can include one or more surfaces that are sized and oriented independently of the voxels. For example, the one or more surfaces can represent complex geometry or geometry with high curvature such as airfoils, the underhood geometry of a vehicle, pipes in a cooling system, etc. The data processing system can determine multiple planar surface elements to represent the one or more surfaces of the simulation space. The data processing system can determine one or more curved surface elements based on the multiple planar elements. For example, the data processing system can combine multiple planar surface elements into one curved surface element. The data processing system can simulate a physical process by performing surface interactions between the particles in the voxels and the curved surface elements.

One method for simulating fluid flows is the so-called Lattice Boltzmann Model (LBM). In an LBM-based physical process simulation system, fluid flow is represented by distribution function values, evaluated at a set of discrete velocities using the well-known Lattice Boltzmann equation (see Eq. I.1 below) that describes the time-evolution of the distribution function. The distribution function involves two processes, a streaming process and a collision process.

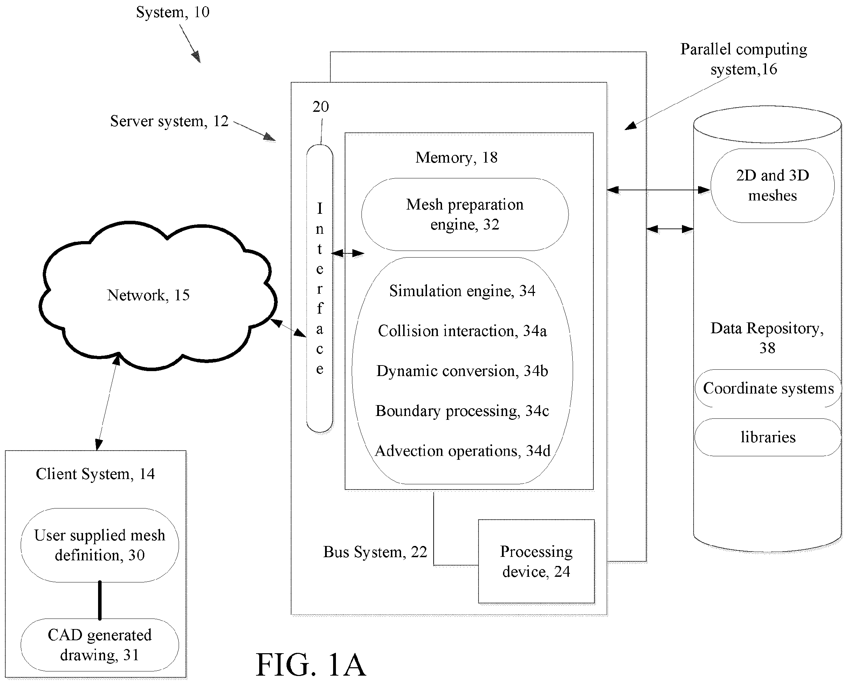

FIG. 1A illustrates a schematic of an example data processing system 10 that executes a Lattice Boltzmann (LB) based simulation including curved surface elements in the digital representation of the simulation space. The system 10 in this implementation is based on a client-server or cloud-based architecture and includes a server system 12 implemented as a massively parallel computing system 16 (stand alone or cloud-based) and a client system 14 coupled via a network 15. The server system 12 includes memory 18, a bus system 22, interfaces 20 (e.g., user interfaces/network interfaces/display or monitor interfaces, etc.) and a processing device 24. In memory 18 are a mesh preparation engine 32 and a simulation engine 34.

While FIG. 1A shows mesh preparation engine 32 in memory 18, the mesh preparation engine can be a third-party application that is executed on a different system than server 12. Whether mesh preparation engine 32 executes in memory 18 or is executed on a different system than server 12, mesh preparation engine 32 receives a user-supplied mesh definition 30 based on CAD generated drawings 31 and then prepares a mesh and sends (and/or stores) the prepared mesh to simulation engine 34. Simulation engine 34 includes collision interaction module 34a, which includes surface dynamics conversion 34b, boundary processing module 34c, and advection operations 34d. System 10 accesses data repository 38, which stores 2D and/or 3D meshes (Cartesian and/or curvilinear), coordinate systems, and libraries.

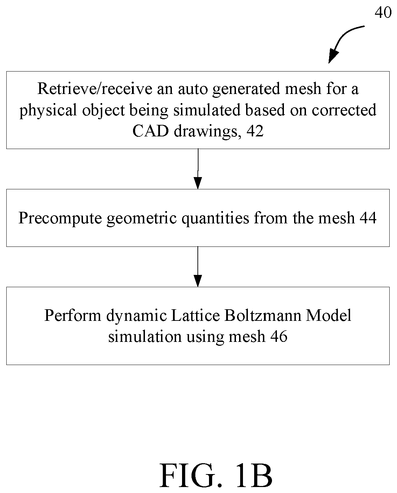

Referring to FIG. 1B, a process 40 for simulating fluid flow about a representation of a physical object is shown. In the example that will be discussed herein, the physical object is an airfoil. The use of an airfoil is merely illustrative however, as the physical object can be of any shape and, in particular, can have planar and/or curved surface(s). Process 40 receives 42, e.g., from client system 14 or retrieves from data repository 38, a mesh (or grid) for the physical object being simulated. In other embodiments, either an external system or the server 12 based on user input, generates the mesh for the physical object being simulated. The process precomputes 44 geometric quantities from the retrieved mesh and performs a dynamic Lattice Boltzmann Model simulation 46 using the precomputed geometric quantities corresponding to the retrieved mesh. Lattice Boltzmann Model simulation includes the simulation 46 of the evolution of particle distributions that includes the surface dynamics conversion, boundary modeling, and advection of particles to a next cell in the LBM mesh. The particle distribution includes a digital representation of the digital particles in the voxels in the LBM mesh.

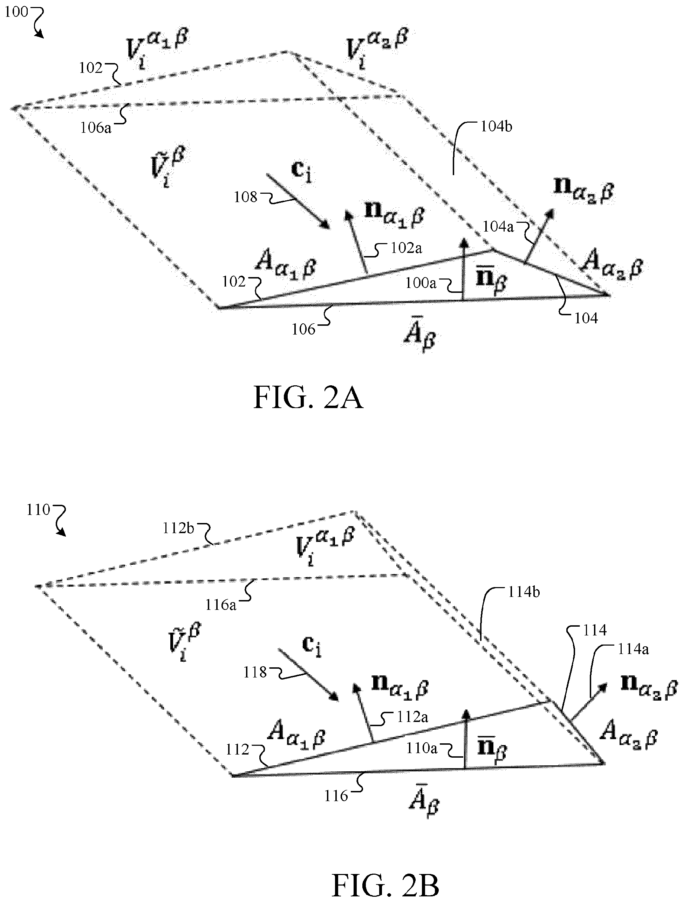

FIGS. 2A-2B each illustrate an example of a curved facet 100, 110 that can be used in a simulation of a physical process to represent a curved surface. Each curved facet 100, 110 is formed by a combination of smaller sub-planar facets. Curved facet 100 includes sub-planar facet 102 α₁ and 104 α₂. Curved facet 110 includes sub-planar facets 112 α₁ and 114 α₂. Each sub-planar facet 102, 104, 112, 114 has an area and a normal vector 102a, 104a, 112a, 114a. The curved facets 100, 110 also have a normal vector 100a, 110a. The curved facets 100, 110 have a projected area *A̅*_{β} that represents a "flat" portion 106, 116 of the curved facets 100, 110. Parallelepipeds 106a, 116a associated with the "flat" portion 106, 116 of the curved facets 100, 110 and the lattice velocity 108, 118 are illustrated. Parallelepipeds 102b, 104b, 112b, 114b associated with the sub-planar facets 102, 104, 112, 114 and the lattice velocity 108, 118 are also shown.

A data processing system (e.g., system 10) can construct a curved facet (e.g., curved facets 100, 110) by combining a set of smaller planar facets (sub-planar facets). Such a curved facet can be either convex or concave. Each sub-planar facet of the curved facet has a surface normal pointing away from the surface and a surface area. The surface normal vector of the curved facet can be determined using an average surface normal vector based on all of the sub-planar surface normal vectors of the curved facet. For example, the data processing system can determine a weighted average vector using the surface area of the sub-planar facets as the weights for the corresponding sub-planar facet surface normal vector. In this manner, sub-planar facets with larger surface areas will contribute more to the direction of the surface normal vector than sub-planar facets with smaller surface areas. The weighted average vector can be normalized based on the magnitude of the weighted average. The surface area of the curved facet can be determined based on the combination of the surface area of all of the sub-planar facets.

Likewise, each sub-planar facet has well defined parallelepiped volumes based on the fluid particle velocities and the surface area of the sub-planar facets. The data processing system determines the parallelepiped volumes of the curved facet based on the summation of the parallelepiped volumes of the sub-planar facets. Note that the parallelepiped volumes of the sub-planar facet are all on the fluid side of the sub-planar facet, e.g., there are no parallelepipeds with lattice velocities parallel to the sub-planar facet. However, the parallelepiped volumes of the curved facet are in general not zero for the so called parallel parallelepiped (e.g., a parallelepiped corresponding to a fluid particle velocity parallel to the facet) because the volume of the parallelepipeds of the curved facet are not equal to the projected area of the curved facet into a plane multiplied by the particle fluid velocities, unless the curved facet is a planar facet. In fact, the parallelepiped volumes for curved facets are generally greater than the parallelepiped volumes for a facet with the projected area. Forming the curved facets changes the definition of the associated parallelepipeds as compared with planar facets. Other volume weights (e.g., parallelepiped overlapping volumes in voxels) are unchanged.

### Detailed Example

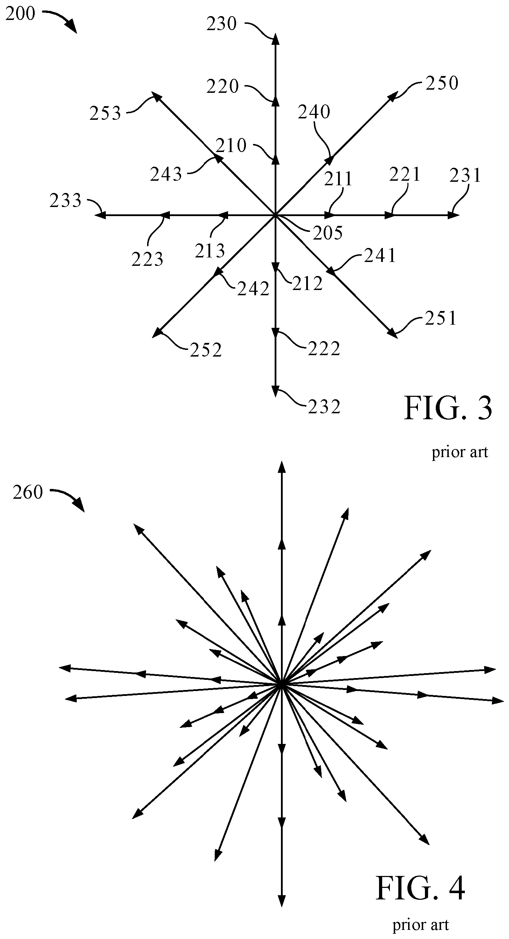

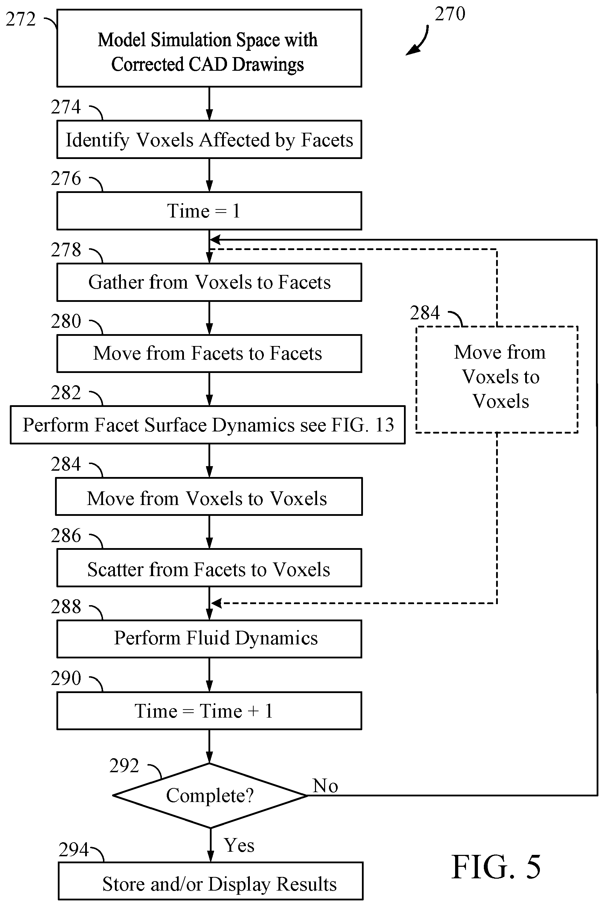

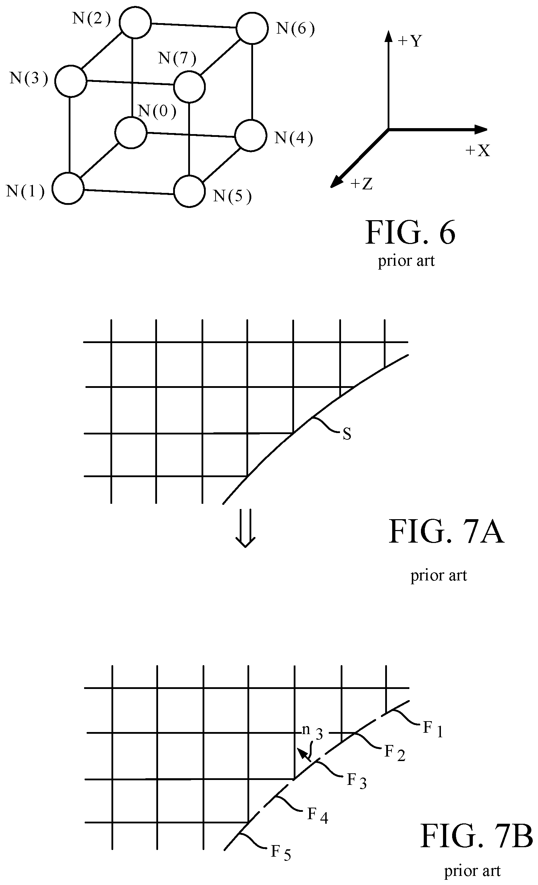

In the procedure discussed in FIG. 5 below, a flow simulation process is described using CAD drawings with the identified void space to configure a simulation space. In FIGS. 3 and 4 that precede and FIGS. 6, 7A, 7B, 8, 9, 10, 11 and 12, each of these figures are labeled as prior art because these figures appear in U.S. Patent 5,848,260 (the '260 patent), which is hereby incorporated in its entirety.

However, the figures as they appear in the above patent do not take into consideration any modifications that would be made to a flow simulation using curved surface elements because that process described herein is not described in the above referenced patents.

### Model Simulation Space

In an LBM-based physical process simulation system, fluid flow is represented by the distribution function values evaluated at a set of discrete velocities. The dynamics of the distribution function is governed by the Lattice Boltzmann equation which relates the change of the distribution due to the so-called "streaming process" to changes in the distribution function due to the "collision process" The streaming process is when a pocket of fluid starts out at a mesh location, and then moves along one of the plural velocity vectors to the next mesh location. At that point, the "collision factor," i.e., the effect of nearby pockets of fluid on the starting pocket of fluid, is calculated. The fluid can only move to another mesh location, so the proper choice of the velocity vectors is necessary so that all of the components of all of the velocities are multiples of a common speed. The collision process uses a "collision operator" to represent the change of the distribution function due to the collisions among the pockets of fluids. The particular form of the collision operator is of the Bhatnagar, Gross and Krook (BGK) operator. The collision operator forces the distribution function to go to prescribed values.

The BGK operator is constructed according to the physical argument that, no matter what the details of the collisions, the distribution function approaches a well-defined local equilibrium via collisions. according to a characteristic relaxation time to reach equilibrium via collisions. Dealing with particles (e.g., atoms or molecules), the relaxation time is typically taken as a constant.

From this simulation, conventional fluid variables, such as mass and fluid velocity, are obtained based on simple summations of products of the distribution. Due to symmetry considerations, the set of velocity values are selected in such a way that they form certain lattice structures when spanned in the configuration space. The dynamics of such discrete systems obey the LBE, where the collision operator usually takes the BGK form as described above. By proper choice of the equilibrium distribution forms, it can be theoretically shown that the Lattice Boltzmann equation gives rise to correct hydrodynamics and thermo-hydrodynamics. That is, the hydrodynamic moments derived from the distribution function obey the Navier-Stokes equations in the macroscopic limit.

The collective values of the lattice velocities and the associated weights define an LBM. The LBM can be implemented, efficiently on scalable computer platforms and run with great robustness for time unsteady flows and complex boundary conditions.

A standard technique of obtaining the macroscopic equation of motion for a fluid system from the Boltzmann equation is the Chapman-Enskog method in which successive approximations of the full Boltzmann equation are taken. In a fluid system, a small disturbance of the density travels at the speed of sound. In a gas system, the speed of sound is generally determined by the temperature. The importance of the effect of compressibility in a flow is measured by the ratio of the characteristic velocity and the sound speed, which is known as the Mach number.

A general discussion of an LBM-based simulation system is provided below that includes the dynamic conversion 34b to conduct fluid flow simulations. For a further explanation of LBM-based physical process simulation systems, the reader is referred to the '260 patent.

Referring to FIG. 3, a first model (2D-1) 200 is a two-dimensional model that includes 21 velocities. Of these 21 velocities, one (205) represents particles that are not moving; three sets of four velocities represent particles that are moving at either a normalized speed (r) (210-213), twice the normalized speed (2r) (220-223), or three times the normalized speed (3r) (230-233) in either the positive or negative direction along either the *x* or *y* axis of the lattice; and two sets of four velocities represent particles that are moving at the normalized speed (r) (240-243) or twice the normalized speed (2r) (250-253) relative to both of the *x* and *y* lattice axes.

Referring to FIG. 4, illustrated is a second model (3D-1) 260 - a three-dimensional model that includes 39 velocities where each velocity is represented by one of the arrowheads of FIG. 4. Of these 39 velocities, one represents particles that are not moving; three sets of six velocities represent particles that are moving at either a normalized speed (r), twice the normalized speed (2r), or three times the normalized speed (3r) in either the positive or negative direction along the *x, y* or *z* axis of the lattice; eight represent particles that are moving at the normalized speed (r) relative to all three of the *x, y, z* lattice axes; and twelve represent particles that are moving at twice the normalized speed (2r) relative to two of the *x, y, z* lattice axes.

More complex models, such as a 3D-2 model, which includes 101 velocities, and a 2D-2 model which includes 37 velocities may also be used. For the three-dimensional model 3D-2, of the 101 velocities, one represents particles that are not moving (Group 1); three sets of six velocities represent particles that are moving at either a normalized speed (r), twice the normalized speed (2r), or three times the normalized speed (3r) in either the positive or negative direction along the *x*, *y* or *z* axis of the lattice (Groups 2, 4, and 7); three sets of eight represent particles that are moving at the normalized speed (r), twice the normalized speed (2r), or three times the normalized speed (3r) relative to all three of the *x, y, z* lattice axes (Groups 3, 8, and 10); twelve represent particles that are moving at twice the normalized speed (2r) relative to two of the *x, y, z* lattice axes (Group 6); twenty four represent particles that are moving at the normalized speed (r) and twice the normalized speed (2r) relative to two of the *x, y, z* lattice axes, and not moving relative to the remaining axis (Group 5); and twenty four represent particles that are moving at the normalized speed (r) relative to two of the *x, y, z* lattice axes and three times the normalized speed (3r) relative to the remaining axis (Group 9).

For the two-dimensional model 2D-2, of the 37 velocities, one represents particles that are not moving (Group 1); three sets of four velocities represent particles that are moving at either a normalized speed (*r*), twice the normalized speed (2*r*), or three times the normalized speed (3*r*) in either the positive or negative direction along either the *x* or *y* axis of the lattice (Groups 2, 4, and 7); two sets of four velocities represent particles that are moving at the normalized speed (*r*) or twice the normalized speed (2*r*) relative to both of the *x* and *y* lattice axes; eight velocities represent particles that are moving at the normalized speed (*r*) relative to one of the *x* and *y* lattice axes and twice the normalized speed (2*r*) relative to the other axis; and eight velocities represent particles that are moving at the normalized speed (*r*) relative to one of the *x* and *y* lattice axes and three times the normalized speed (3*r*) relative to the other axis.

The LB models described above provide a specific class of efficient and robust discrete velocity kinetic models for numerical simulations of flows in both two-and three-dimensions. A model of this kind includes a particular set of discrete velocities and weights associated with those velocities. The velocities coincide with grid points of Cartesian coordinates in velocity space which facilitates accurate and efficient implementation of discrete velocity models, particularly the kind known as the Lattice Boltzmann models. Using such models, flows can be simulated with high fidelity.

Referring to FIG. 5, a physical process simulation system that operates according to a procedure 270 to simulate a physical process such as fluid flow is described. Prior to the flow simulation, a simulation space is modeled (272) using CAD drawings as discussed above, as a collection of voxels. The simulation space is generated using a computer-aided-design (CAD) program and the gap correction processing of the CAD generated drawings. For example, a CAD program could be used to draw an air foil positioned in a wind tunnel.

The resolution of the lattice may be selected based on the Reynolds number of the system being simulated. The Reynolds number is related to the viscosity of the flow, the characteristic length of an object in the flow, and the characteristic velocity of the flow.

The characteristic length of an object represents large scale features of the object. For example, if flow around a micro-device were being simulated, the height of the micro-device might be considered the characteristic length. When flow around small regions of an object (e.g., the side mirror of an automobile) is of interest, the resolution of the simulation may be increased, or areas of increased resolution may be employed around the regions of interest. The dimensions of the voxels decrease as the resolution of the lattice increases.

The state space is represented as the distribution function of particles or particles, per unit volume in a given state at a lattice site denoted by a spatial vector at a given time. The number of states is determined by the number of possible velocity vectors within each energy level. The velocity vectors are integer linear speeds in a space having three dimensions: *x*, *y*, and *z*. The number of states is increased for multiple-species simulations. Each state represents a different velocity vector at a specific energy level (i.e., energy level zero, one or two). The velocity of each state is indicated with its "speed" in each of the three dimensions.

The energy level zero state represents stopped particles that are not moving in any dimension, i.e., the speed of the particles in each dimension is zero. Energy level one states represents particles having a ±1 speed in one of the three dimensions and a zero speed in the other two dimensions. Energy level two states represent particles having either a ±1 speed in all three dimensions, or a ±2 speed in one of the three dimensions and a zero speed in the other two dimensions.

Generating all the possible permutations of the three energy levels gives a total of 39 possible states (one energy zero state, 6 energy one states, 8 energy three states, 6 energy four states, 12 energy eight states and 6 energy nine states.). Each voxel (i.e., each lattice site) is represented by a state vector. The state vector completely defines the status of the voxel and includes 39 entries. The 39 entries correspond to the one energy zero state, 6 energy one states, 8 energy three states, 6 energy four states, 12 energy eight states and 6 energy nine states. By using this velocity set, the system can produce Maxwell-Boltzmann statistics for an achieved equilibrium state vector.

For processing efficiency, the voxels are grouped in 2x2x2 volumes called microblocks. The microblocks are organized to permit parallel processing of the voxels and to minimize the overhead associated with the data structure.

A microblock is illustrated in FIG. 6. The voxels are represented at the corners of the microblock.

Referring to FIGS. 7A and 7B, a surface S (FIG. 7A) is represented in the simulation space (FIG. 7B) as a collection of facets F_{α}, where α is an index that enumerates a particular facet. A facet is not restricted to the voxel boundaries but is typically sized on the order of or is slightly smaller than the size of the voxels adjacent to the facet so that the facet affects a relatively small number of voxels. Properties are assigned to the facets for the purpose of implementing surface dynamics. In particular, each facet *F_{α}* has a unit normal (*nₐ*), a surface area (*A_{α}*), a center location (*x_{α}*), and a facet distribution function (*fᵢ(*α*)*) that describes the surface dynamic properties of the facet. The total energy distribution function is treated in the same way as the flow distribution for facet and voxel interaction.

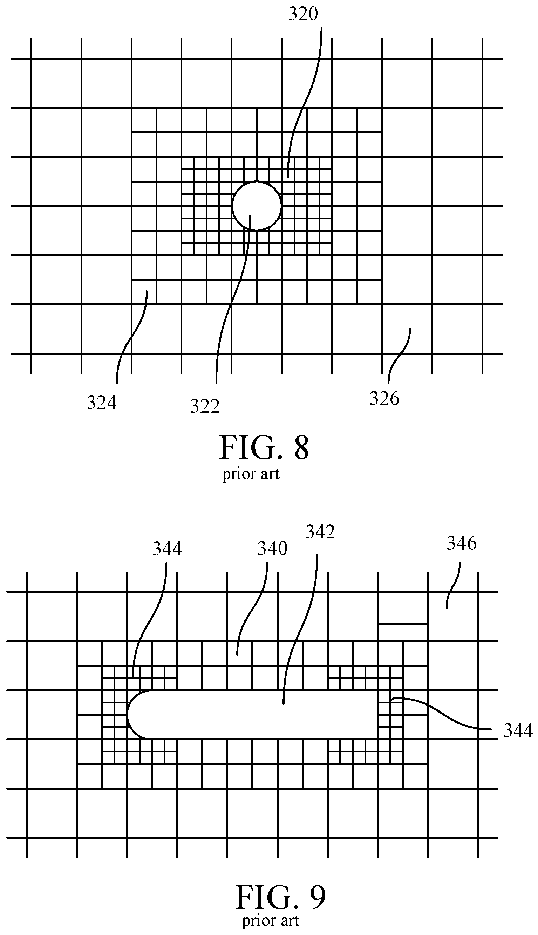

Referring to FIG. 8, different levels of resolution may be used in different regions of the simulation space to improve processing efficiency. Typically, the region 320 around an object 322 is of the most interest and is therefore simulated with the highest resolution. Because the effect of viscosity decreases with distance from the object, decreasing levels of resolution (i.e., expanded voxel volumes) are employed to simulate regions 324, 326 that are spaced at increasing distances from the object 322.

Similarly, as illustrated in FIG. 9, a lower level of resolution may be used to simulate a region 340 around less significant features of an object 342 while the highest level of resolution is used to simulate regions 344 around the most significant features (e.g., the leading and trailing surfaces) of the object 342. Outlying regions 346 are simulated using the lowest level of resolution and the largest voxels.

### C. Identify Voxels Affected By Facets

Referring again to FIG. 5, once the simulation space has been modeled (272), voxels affected by one or more facets are identified (274). Voxels may be affected by facets in a number of ways. First, a voxel that is intersected by one or more facets is affected in that the voxel has a reduced volume relative to non-intersected voxels. This occurs because a facet, and material underlying the surface represented by the facet, occupies a portion of the voxel. A fractional factor P_{f}*(x)* indicates the portion of the voxel that is unaffected by the facet (i.e., the portion that can be occupied by a fluid or other materials for which flow is being simulated). For non-intersected voxels, P_{f} *(x)* equals one.

Voxels that interact with one or more facets by transferring particles to the facet or receiving particles from the facet are also identified as voxels affected by the facets. All voxels that are intersected by a facet will include at least one state that receives particles from the facet and at least one state that transfers particles to the facet. In most cases, additional voxels also will include such states.

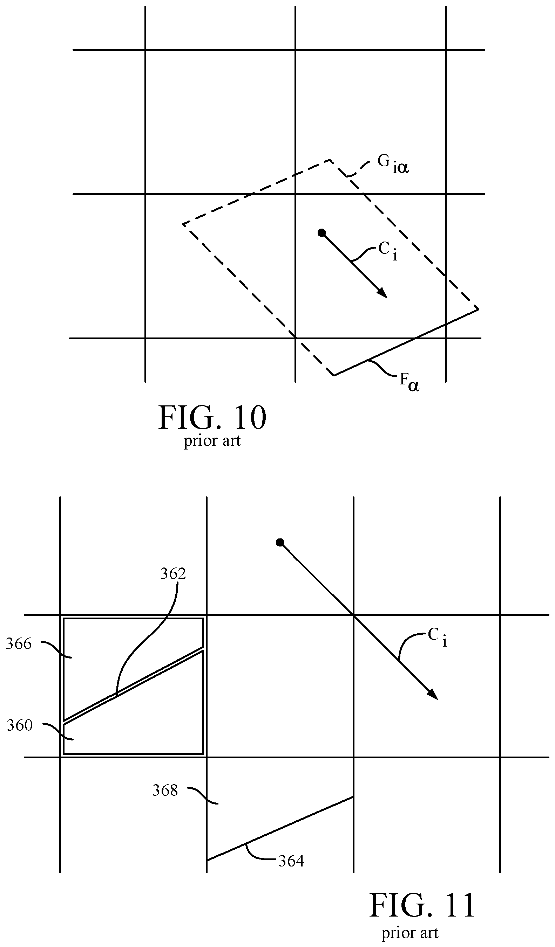

Referring to FIG. 10, for each state *i* having a non-zero velocity vector *cᵢ,* a facet *F_{α}* receives particles from, or transfers particles to, a region defined by a parallelepiped *G_{iα}* having a height defined by the magnitude of the vector dot product of the velocity vector *cᵢ* and the unit normal *n_{α}* of the facet and a base defined by the surface area *A_{α}* of the facet so that the volume *V_{iα}* of the parallelepiped *G_{iα}* equals the base times the height.

The facet *F_{α}* receives particles from the volume *V_{iα}* when the velocity vector of the state is directed toward the facet, and transfers particles to the region when the velocity vector of the state is directed away from the facet. As will be discussed below, this relationship is modified when another facet occupies a portion of the parallelepiped *G_{iα}*, a condition that could occur in the vicinity of non-convex features of a surface such as interior corners.

The parallelepiped *G_{iα}* of a facet *F_{α}* may overlap portions or all of multiple voxels. The number of voxels or portions thereof is dependent on the size of the facet relative to the size of the voxels, the energy of the state, and the orientation of the facet relative to the lattice structure. The number of affected voxels increases with the size of the facet. Accordingly, the size of the facet, as noted above, is typically selected to be on the order of or smaller than the size of the voxels located near the facet.

The flux of particles for a given state that move between a voxel and a facet *F_{α}* equals the density of the particles of the state in the voxel multiplied by the volume of the region of overlap with the voxel.

When the parallelepiped G_{iα} is intersected by one or more facets, the volume of the parallelepiped *V_{iα}* is equal to the summation of the volumes associated with each of the voxels overlapped by *G_{iα}* and the summation of the volumes associated with all of the facets that intersect *G_{iα}.*

### D. Perform Simulation

Once the voxels that are affected by one or more facets are identified (274), a timer is initialized to begin the simulation (276). During each time increment of the simulation, movement of particles from voxel to voxel is simulated by an advection stage (278-286) that accounts for interactions of the particles with surface facets. Next, a collision stage (288) simulates the interaction of particles within each voxel. Thereafter, the timer is incremented (290). If the incremented timer does not indicate that the simulation is complete (292), the advection and collision stages (278-288) are repeated. If the incremented timer indicates that the simulation is complete (292), results of the simulation are stored and/or displayed (294).

### 1. Boundary Conditions For Surface

To correctly simulate interactions with a surface, each facet meets four boundary conditions. First, the combined mass of particles received by a facet equals the combined mass of particles transferred by the facet (i.e., the net mass flux to the facet equals zero). Second, the combined energy of particles received by a facet equals the combined energy of particles transferred by the facet (i.e., the net energy flux to the facet equals zero). These two conditions may be satisfied by requiring the net mass flux at each energy level (i.e., energy levels one and two) to equal zero.

The other two boundary conditions are related to the net momentum of particles interacting with a facet. For a surface with no skin friction, referred to herein as a slip surface, the net tangential momentum flux equals zero and the net normal momentum flux equals the local pressure at the facet. Thus, the components of the combined, received, and transferred momentums that are perpendicular to the normal n_{α} of the facet (i.e., the tangential components) are equal, while the difference between the components of the combined, received, and transferred momentums that are parallel to the normal n_{α} of the facet (i.e., the normal components) equals the local pressure at the facet. For non-slip surfaces, friction of the surface reduces the combined tangential momentum of particles transferred by the facet relative to the combined tangential momentum of particles received by the facet by a factor that is related to the amount of friction.

### 2. Gather From Voxels to Facets

Simulating interaction between particles and a surface, particles are gathered from the voxels and provided to the facets (278). As noted above, the flux of particles between a voxel and a facet for a given state is related to the overlap of the parallelepiped of the facet and the voxel for the given state. Only voxels for which parallelepiped has a non-zero value are summed. As noted above, the size of the facets is selected so that the parallelepiped volumes for the facets have a non-zero value for only a small number of voxels. The volume of the parallelepipeds and the flux of particles can have non-integer values, and thus a data processing system stores and processes these quantities as real numbers.

### 3. Move From Facet to Facet

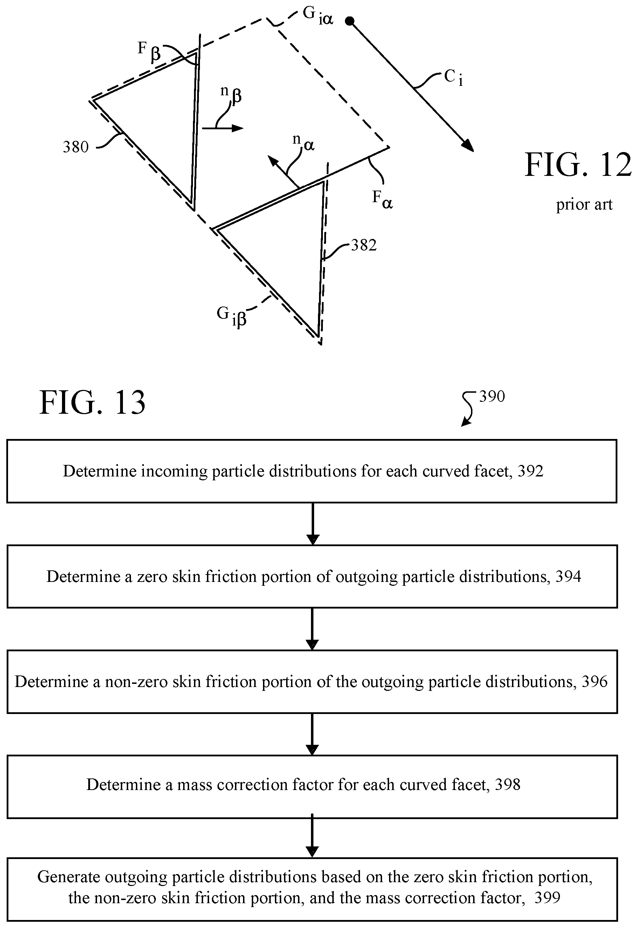

Next, particles are moved between facets (280). If the parallelepiped *G_{iα}* for an incoming state of a facet *F_{α}* is intersected by another facet *F_{β}*, then a portion of the particles for the incoming state received by the facet *F_{α}* will come from the facet *F_{β}.* In particular, facet *F_{α}* will receive a portion of the particles for the given state produced by facet *F_{β}* during the previous time increment. This relationship is illustrated in FIG. 12, where a portion 380 of the parallelepiped *G_{iα}* that is intersected by facet F_{β} equals a portion 382 of the parallelepiped *G_{iβ}* that is intersected by facet *F_{α}*. For each state directed toward a facet *F_{α}*, the number of particles provided to the facet *F_{α}* by the other facets is equal to the flux of particles from the other facets from the previous time step multiplied by the ratio of the overlapping volume between parallelepipeds of the other facets and the facet *F_{α}* for a given state and the total volume of the parallelepiped for the facet *F_{α}*. for that state.:
The total flux of particles for the given state into the facet *F_{α}* is equal to the sum of the particles from all of the voxels overlapping the parallelepipeds of the facet and the sum of the fluxes from all of the facets that have parallelepiped volumes overlapping with the parallelepiped volumes of the facet *F_{α}*: The state vector for the facet, also referred to as a facet distribution function, has a number of entries corresponding to the number entries of the voxel states vectors, where the number of entries is the number of discrete lattice speeds in the LBM. The input states of the facet distribution function are set equal to the flux of particles into those states divided by the volume *V_{iα}*.

The facet distribution function is a simulation tool for generating the output flux from a facet and is not necessarily representative of actual particles. To generate an accurate output flux, values are assigned to the other states of the distribution function. Outward states are populated using the technique described above for populating the inward states. In an alternative approach, the flux from states other than incoming states may be generated using values of the outward flux from the previous time step.

For parallel states (e.g., states with velocities parallel to the facet), the volume of the associated parallelepiped is zero. The facet distribution function for parallel states is determined as the limit of the facet distribution function as the volume of the parallelepiped and any overlapping parallelepipeds approach zero. The values of states having zero velocity (i.e., rest states and states (0, 0, 0, 2) and (0, 0, 0, -2)) are initialized at the beginning of the simulation based on initial conditions for temperature and pressure. These values are then adjusted over time.

### 4. Perform Facet Surface Dynamics

Next, surface dynamics are performed 282 for each facet to satisfy the boundary conditions. A procedure 390 for performing surface dynamics for a facet is illustrated in FIG. 13. Incoming particle distributions for each curved facet are determined 392. The outgoing particle distributions are generated 399 based on determining a zero skin friction portion 394 (e.g., zero tangential stress, slip condition), determining a non-zero skin friction portion 396, and determining a mass correction factor 398.

The incoming particle distributions (e.g., incoming momentum flux) can be determined for each curved facet based on the parallelepiped volumes and the associated particle velocities for each parallelepiped volume. The incoming particle distributions can be determined for each lattice direction that has a corresponding parallelepiped greater than zero. This includes incoming state fluxes where the fluid velocity direction has a positive component oriented in the same direction as the surface normal vector of the curved facet.

For any existing incoming state, there exists a corresponding outgoing state so that the outgoing lattice velocity is opposite to that of its corresponding incoming lattice velocity. The outgoing particle distributions are scattered into the parallelepiped volumes from which the incoming particles are gathered for each lattice velocity. The facet surface dynamics (procedure 390) determines the outgoing particle distributions (e.g., outgoing momentum flux).

The facet surface dynamics using curved facets extends the approach of the '260 patent that uses only planar facets. The slip algorithm on curved facets is executed on the "flat" part of the curved facet where the "flat" parallelepiped volumes include the parallelepiped volumes corresponding to lattice velocities that have a negative component in the direction of the surface normal vector of the curved facet. The "flat" incoming particle distribution is proportional to the ratio of the "flat" parallelepiped volumes to the curved facet parallelepiped volumes. Note that this ratio is less than or equal to one.

For the "flat" portion of the curved facet, the outgoing particle distribution is determined in a similar manner as the '260 patent. In particular, the outgoing particle distribution is based on a zero skin friction portion, a non-zero skin friction portion (e.g., to realize a desired tangential force), and a mass correction factor to preserve local MME conservation for the "flat" portion.

The zero skin friction portion is determined by considering the volume of the parallelepipeds and the outgoing flux of particles. Surface density and fluid velocity are sampled from neighboring voxels in the lattice structure based on the parallelepiped volumes of the curved facet. Tangential momentum flux is preserved for the zero skin friction portion (e.g., the surface moment flux includes only momentum flux normal to the surface of the "flat" portion of the parallelepiped).

The skin friction portion of the outgoing particle distribution for the "flat" portion of the curved facet can be determined based on a skin friction coefficient for the facet, the area of the curved facet, the fluid density, and the fluid tangential velocity.

The mass correction factor can be determined in a two-step process to ensure local mass conservation. First, the mass correction factor for the "flat" portion of the curved facet is determined by finding the difference between the incoming particle distribution and the outgoing particle distribution. Second, a mass correction factor is determined according to the shape of the curved facet. For a curved facet with a convex shape, the mass correction is determined based on the difference between the incoming particle distributions and the outgoing particle distributions of the "flat" portion of the curved facet. The mass correction factor is proportional to the difference in the volume of the parallelepipeds for the curved facet and the volume of the parallelepipeds of the "flat" portion, and the incoming surface momentum flux of particles. For convex curved facets, the total outgoing particle distribution can be determined by combining the outgoing particle distributions from the "flat" portion of the curved facet (including the zero skin friction portion and the non-zero skin friction portion), the mass correction factor for the "flat" portion of the curved facet, and the mass correction factor for the convex portion.

For a curved facet with a concave shape, the curved facet can advect particles to itself when its own facet-to-facet parallelepipeds overlap. In such a situation, a state bounce back technique can be applied to determine the portion of particles advected from the facet to itself. The outgoing particle distribution for a concave facet can be determined by combining the outgoing particle distributions from the "flat" portion of the curved facet (including the zero skin friction portion and the non-zero skin friction portion), the mass correction factor for the "flat" portion of the curved facet, and the bounce back portion of the particle distribution from the concave facet.

### 5. Move From Voxels to Voxels

Referring again to FIG. 5, particles are moved between voxels along the three-dimensional rectilinear lattice (284). This voxel to voxel movement is the only movement operation performed on voxels that do not interact with the facets (i.e., voxels that are not located near a surface). In typical simulations, voxels that are not located near enough to a surface to interact with the surface constitute a large majority of the voxels.

Each of the separate states represents particles moving along the lattice with integer speeds in each of the three dimensions: *x*, *y*, and *z*. The integer speeds include: 0, ±1, and ±2. The sign of the speed indicates the direction in which a particle is moving along the corresponding axis.

For voxels that do not interact with a surface, the move operation is computationally quite simple. The entire population of a state is moved from its current voxel to its destination voxel during every time increment. At the same time, the particles of the destination voxel are moved from that voxel to their own destination voxels. For example, an energy level 1 particle that is moving in the +1*x* and +1*y* direction (1, 0, 0) is moved from its current voxel to one that is +1 over in the *x* direction and 0 for other direction. The particle ends up at its destination voxel with the same state it had before the move (1,0,0). Interactions within the voxel will likely change the particle count for that state based on local interactions with other particles and surfaces. If not, the particle will continue to move along the lattice at the same speed and direction.

The move operation becomes slightly more complicated for voxels that interact with one or more surfaces. This can result in one or more fractional particles being transferred to a facet. Transfer of such fractional particles to a facet, results in fractional particles remaining in the voxels. These fractional particles are transferred to a voxel occupied by the facet.

Referring to FIG. 11, when a portion 360 of the particles of a given state for a voxel 362 is moved to a facet 364 (278), the remaining portion 366 is moved to a voxel 368 in which the facet 364 is located and from which particles of the state are directed to the facet 364. Thus, if the state population equaled 25 and the volume of the parallelepiped overlapped with the voxel equaled 0.25 (i.e., a quarter of the voxel intersects the parallelepiped), then 6.25 particles would be moved to the facet 364 and 18.75 particles would be moved to the voxel 368 occupied by the facet 364. Because multiple facets could intersect a single voxel, the number of particles of a given state transferred to a voxel occupied by one or more facets is the related to the fraction of the volume of the voxel not overlapped by parallelepipeds of the intersecting facets (e.g., the number of particles transferred to the voxel equals the total number of incoming particles from the source voxel multiplied by the fraction of the voxel not overlapped by parallelepipeds of the intersecting facets).

### 6. Scatter From Facets to Voxels

Next, the outgoing particles from each facet are scattered to the voxels (286). Essentially, this scatter is the reverse of the gather by which particles were moved from the voxels to the facets. The number of particles of a given state that move from a facet to a voxel is proportional to the outgoing flux of particles from the facet multiplied by the ratio of the parallelepiped volume overlapping the voxel to the total parallelepiped volume. A proportionality factor accounting for the volume reduction of partial voxels can also be included. For each state, the total number of particles directed from the facets to a voxel is determined based on the sum of the particles moving from each facet to that voxel.

After scattering particles from the facets to the voxels, combining them with particles that have advected in from surrounding voxels, and integerizing the result, it is possible that certain directions in certain voxels may either underflow (become negative) or overflow (exceed 255 in an eight-bit implementation). This would result in either a gain or loss in mass, momentum and energy after these quantities are truncated to fit in the allowed range of values. To protect against such occurrences, the mass, momentum and energy that are out of bounds are accumulated prior to truncation of the offending state. For the energy to which the state belongs, an amount of mass equal to the value gained (due to underflow) or lost (due to overflow) is added back to randomly (or sequentially) selected states having the same energy and that are not themselves subject to overflow or underflow. The additional momentum resulting from this addition of mass and energy is accumulated and added to the momentum from the truncation. By only adding mass to the same energy states, both mass and energy are corrected when the mass counter reaches zero. Finally, the momentum is corrected using pushing/pulling techniques until the momentum accumulator is returned to zero.

### 7. Perform Fluid Dynamics

Fluid dynamics are performed (288) FIG. 5. This may be referred to as microdynamics or intravoxel operations. Similarly, the advection procedure may be referred to as intervoxel operations. The microdynamics operations described below may also be used to collide particles at a facet to produce a Boltzmann distribution.

The fluid dynamics is ensured in the Lattice Boltzmann equation models by a particular collision operator known as the BGK collision model. This collision model mimics the dynamics of the distribution in a real fluid system. After the advection step, the conserved quantities of a fluid system, specifically the density, momentum and the energy are obtained from the distribution function. From these quantities, the equilibrium distribution function can be fully specified. The choice of the velocity vector set and the weights, together with the Lattice Boltzmann equation ensures that the macroscopic behavior obeys the correct hydrodynamic equation.

### Variable Resolution

Variable resolution (as discussed in U.S. Patent 10,360,324, which is hereby incorporated in its entirety) can also be employed and would use voxels of different sizes, e.g., coarse voxels and fine voxels, for different regions of the mesh according to regions of interest. For example, regions of interest can include fine voxels to resolve fluid dynamics at smaller scales and with higher resolution. Outside regions of interest, coarse voxels can be used in the mesh to reduce the number of computations without reducing the accuracy of the fluid flow simulation in the regions of interest. During a simulation of a physical process, particles may be advected between the regions having different resolutions.

Referring to FIGS. 5 and 13, the results of the processes 270 and 390 can be used in manufacturing a physical structure, e.g., using one or more computer-controlled manufacturing systems. For example, the simulation can be used to optimize a shape of a physical object for improved fluid flow around or through the object. The optimized shape can be used as path planning data for computer-aided manufacturing processes to produce the optimized shape. Examples of shapes that can be optimized include airfoil shapes for aerodynamic bodies, flow paths for internal pipe or channel flows (e.g., for a liquid cooling system), nozzles and diffusers for wind tunnels, etc.

Alternatively, or additionally, the results of the fluid flow simulation of process 270 can be used to predict performance of an aerodynamic body (e.g., predicting generated lift or drag on an airfoil), predicting pressure head loss of a fluid flowing through a pipe or channel, and/or predicting the propagation of acoustic waves (e.g., predicting flow induced noise sources and acoustic wave propagation from an exterior of a vehicle such as a car or airplane to the interior of the vehicle). The results of the fluid flow simulation of process 270 can also be used to predict fluid flow around complex geometry such as an underhood region of an automobile to predict thermal performance of a cooling system of the automobile. The techniques described herein improve the accuracy of such fluid flow simulations in predicting performance of an aerodynamic body, predicting pressure head loss of a fluid flowing through a pipe or channel, and/or predicting the thermal performance of a cooling system of an automobile.

### Examples

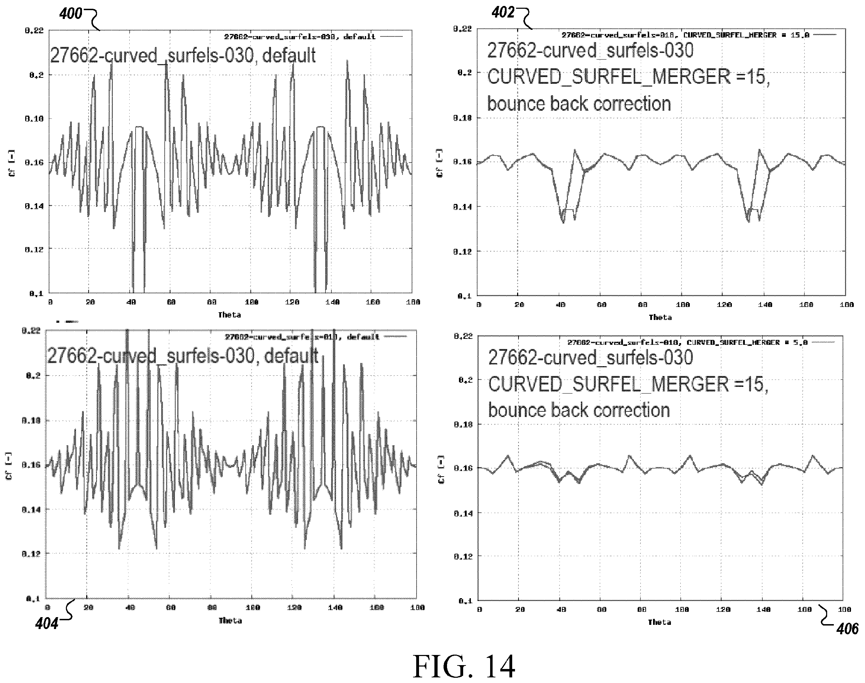

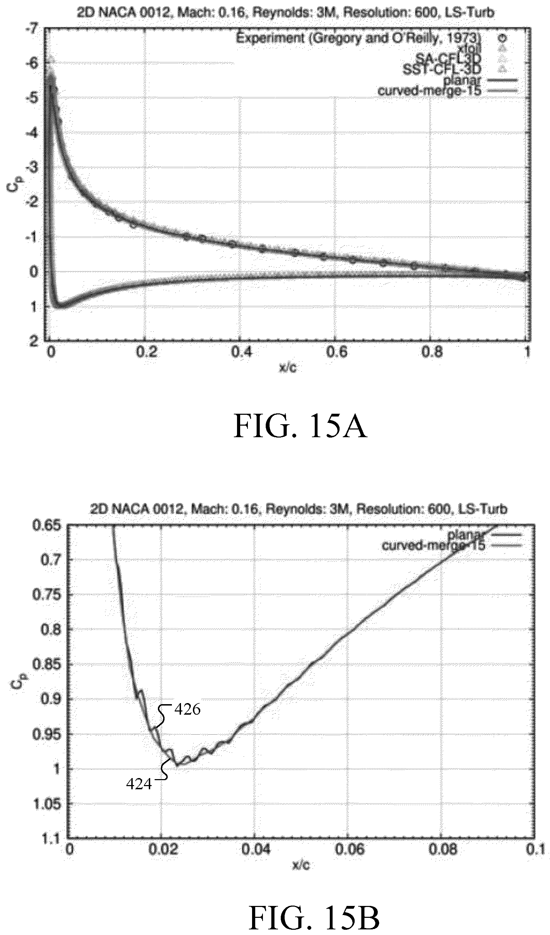

FIGS. 14, 15A, 15B, and Tables 1 and 2 show results from example implementations of the procedures 270 and 390. To avoid arbitrary creation of curved facets in the example implementations, a merger angle threshold is applied during construction of the curved facets. For example, for a curved facet, the maximum angle difference among the normal directions of its sub-planar facets does not exceed the angle threshold. The angle threshold can be chosen based on a desired accuracy and/or a reduced computational complexity. The angle threshold can be determined, for example, by executing simulations with different thresholds and comparing results. In the example implementations, three different thresholds were tested (5, 10 and 15 degrees) yielding consistent results when using any of the three thresholds. Higher thresholds may result in larger and more complex curved facets and a fewer number of total facets. The results shown in FIGS. 14, 15A, 15B and Tables 1 and 2 were performed with an angle threshold of 15 degrees.

Alternatively, or additionally, to avoid arbitrarily large, curved facets, a maximum size for a curved facet can be set (e.g., by a user or by a data processing system). A maximum size of the curved facets can be comparable to the size of voxels near the curved facet. This constraint can be implemented during merging of planar facets into curved facets.

FIG. 14 is a composite plot showing the coefficient of friction for a circular pipe flow driven by the gravity force along the pipe. A periodic boundary condition is applied in the pipe flow direction. Two resolutions, i.e., D30 and D31, with Re = 100 are tested and the results of surface skin friction comparison are shown. Plot 400 shows the skin friction determined by a simulation using only planar facets at resolution D30. Plot 402 shows the skin friction determined by a simulation using curved facets at resolution D30. Plot 404 shows the skin friction determined by a simulation using only planar facets at resolution D31. Plot 406 shows the skin friction determined by a simulation using curved facets at resolution D31. The results using the curved facets (plots 402, 406) achieve the same average skin friction values as the results using the planar facets (plots 400, 404). The simulations conducted with the curved facets realized reduced surface noise (e.g., reduced oscillations in the skin friction) thereby improving the accuracy of the results as compared with the planar facet simulations.

FIGS. 15A-15B show simulation results for simulations of air flow around a 2D NACA0012 airfoil. The simulation was executed with a Reynolds number of 3 × 10⁶, an incoming Mach number of 0.16, and an angle of attack of 10 degrees, using resolution 600 across the chord length of the airfoil. FIG. 15A shows the surface pressure distribution across the surface of the airfoil. The overall surface pressure distribution determined by the simulation using the curved facets matches very well with the results of the simulations using the standard planar facets. FIG. 15B shows a zoomed in view of the surface pressure distribution near the stagnation point at the leading edge of the airfoil where the local surface curvature is high. The results using the curved facets 424 achieved reduced surface noise compared with the results using the planar facets 426. This surface noise reduction is highly desirable for simulation of flow around curved smooth geometry.

Tables 1 and 2 show results for two industrial car cases with coarse grid resolution, a blue model and a sport utility vehicle (SUV). The blue model is a typical benchmark case for external aerodynamics of the vehicle, and the SUV is used in an underhood thermal protection simulation. Both cases, external aerodynamics and underhood thermal protection, include complex geometry with curved surfaces. The overall aerodynamics performance, such as drag and lift forces determined by simulations using curved facets and planar facets, are similar. The main difference between the two approaches in these two vehicle cases is the simulation performance improvement shown in Tables 1 and 2. For both cases, the total facet counts are significantly reduced in the simulation using the curved facets resulting in significantly reduced simulation cost (e.g., 20% reduction for the blue model, 40% reduction for the SUV). Reducing the number of facets necessary to represent the surface reduces the computational cost, and the smaller the voxel-facet ratio is, the bigger the performance savings become when using the curved facets. Reducing the number of facets used in the simulations can also improve the use of memory by the simulation by storing fewer elements in memory.

**Table 1: Blue model simulation performance comparison**

| | Voxel count | Surfel count | Sec/timestep | Cost ratio |
|---|---|---|---|---|
| Planar surfel | 3,066,160 | 278,208 | 0.5876 | 1 |
| Curved surfel | 3,066,160 | 165,000 | 0.46805 | 0.797 |

**Table 2: SUV simulation performance comparison**

| | Voxel count | Surfel count | Sec/timestep | Cost ratio |
|---|---|---|---|---|
| Planar surfel | 4,579,441 | 4,419,712 | 3.659 | 1 |
| Curved surfel | 4,579,441 | 2,217,540 | 2.205 | 0.603 |

Embodiments of the subject matter and the functional operations described in this specification can be implemented in digital electronic circuitry, tangibly embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus). The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that produces an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or another unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

Computers suitable for the execution of a computer program can be based on general or special purpose microprocessors or both, or any other kind of central processing unit. Computer-readable media suitable for storing computer program instructions and data include all forms of non-volatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

### EMBODIMENTS

Although the present invention is defined in the claims, it should be understood that the present invention can also (alternatively) be defined in accordance with the following embodiments:
1. A computer system for digitally simulating a physical process in a three-dimensional computer-aided design (CAD) model of a simulation space, the computer system comprising:
   one or more processors; and
   a memory including:
      a mesh preparation engine for generating and storing a digital representation of a simulation space, the digital representation including a three-dimensional CAD model of the simulation space including a mesh represented as a plurality of voxels including particles, the simulation space comprising one or more surfaces sized and oriented independently of the voxels; and
      a simulation engine for reading, from the mesh preparation engine, the digital representation of the simulation space including the mesh,
      with the simulation engine storing instructions for simulating a physical process, the instructions, when executed by the one or more processors, cause the one or more processors to perform operations comprising:
         reading, from the mesh preparation engine, the digital representation of the simulation space including the three-dimensional CAD model of the simulation space including the mesh;
         determining a plurality of planar facets to represent the one or more surfaces of the simulation space in the mesh;
         determining one or more curved facets in the mesh based on the plurality of planar facets in the mesh; and
         digitally simulating a physical process by performing surface interactions between the one or more curved facets in the mesh and the particles in one or more voxels in the mesh adjacent the one or more curved facets in the mesh.
2. The computer system of embodiment 1, wherein the particles comprise state vectors, each state vector comprises a plurality of entries that correspond to particular momentum states of a plurality of possible momentum states.
3. The computer system of embodiment 2, wherein performing the surface interactions comprises:
   determining, for the one or more curved facets, an incoming momentum flux based on the state vectors of the particles; and
   determining, for the one or more curved facets, an outgoing momentum flux based on the incoming momentum flux.
4. The computer system of embodiment 3, wherein determining the outgoing momentum flux comprises:
   determining a zero skin friction portion to preserve a tangential momentum flux of the particles; and
   determining a non-zero skin friction portion representing a surface momentum flux change of the particles based on particle interactions with the one or more curved facets.
5. The computer system of embodiment 3, wherein determining the outgoing momentum flux comprises determining a mass correction for the one or more curved facets to conserve mass in the physical process.
6. The computer system of embodiment 5, wherein determining the mass correction comprises:
   determining a first portion of the mass correction based on a flat portion of the one or more curved facets; and
   determining a second portion of the mass correction based on a curved portion of the one or more curved facets.
7. The computer system of embodiment 6, wherein determining the second portion of the mass correction comprises determining particles advected from a curved facet with a concave curved portion to the curved facet with the concave curved portion.
8. The computer system of embodiment 1, wherein simulating the physical process by performing surface interactions between the one or more curved facets and the particles in one or more voxels adjacent the one or more curved facets reduces surface noise and improves an accuracy of a simulation around a curved surface.
9. The computer system of embodiment 1, wherein simulating the physical process by performing surface interactions between the one or more curved facets and the particles in one or more voxels adjacent the one or more curved facets reduces the computational complexity of simulating the physical process by reducing a total number of facets representing the one or more surfaces in the lattice structure as compared with simulating the physical process by performing surface interactions between the plurality of planar facets and the particles in one or more voxels adjacent the plurality of planar facets.
10. The computer system of embodiment 1, wherein the instructions further comprise:
   reading, from the memory, the plurality of planar facets representing the one or more surfaces of the simulation space in the mesh;
   storing, in the memory, the one or more curved facets in the mesh determined based on the plurality of planar facets in the mesh; and
   storing, in the memory, the results of a digital simulation of a physical process based on performing surface interactions between the one or more curved facets in the mesh and the particles in one or more voxels in the mesh adjacent the one or more curved facets in the mesh.
11. A method implemented by a data processing system for digitally simulating a physical process in a three-dimensional computer-aided design (CAD) model of a simulation space, the method comprising:
   receiving, by a data processing system, a digital representation of a simulation space, the digital representation including a three-dimensional CAD model of the simulation space including a lattice structure represented as a plurality of voxels including particles, the simulation space comprising one or more surfaces sized and oriented independently of the voxels;
   determining, by the data processing system, a plurality of planar facets to represent the one or more surfaces of the simulation space in the lattice structure;
   determining, by the data processing system, one or more curved facets based on the plurality of planar facets; and
   simulating, by the data processing system, a physical process by performing surface interactions between the one or more curved facets and the particles in one or more voxels adjacent the one or more curved facets.
12. The method of embodiment 11, wherein the particles comprise state vectors, each state vector comprising a plurality of entries that correspond to particular momentum states of a plurality of possible momentum states; and
   wherein performing the surface interactions comprises:
   determining, by the data processing system for the one or more curved facets, an incoming momentum flux based on the state vectors of the particles; and
   determining, by the data processing system for the one or more curved facets, an outgoing momentum flux based on the incoming momentum flux.
13. The method of embodiment 12, wherein determining the outgoing momentum flux comprises:
   determining, by the data processing system, a zero skin friction portion to preserve a tangential momentum flux of the particles;
   determining, by the data processing system, a non-zero skin friction portion representing a surface momentum flux change of the particles based on particle interactions with the one or more curved facets; and
   determining, by the data processing system, a mass correction for the one or more curved facets to conserve mass in the physical process.
14. The method of embodiment 13, wherein determining the mass correction comprises:
   determining, by the data processing system, a first portion of the mass correction based on a flat portion of the one or more curved facets; and
   determining, by the data processing system, a second portion of the mass correction based on a curved portion of the one or more curved facets.
15. The method of embodiment 14, wherein determining the second portion of the mass correction comprises determining, by the data processing system, particles advected from a curved facet with a concave curved portion to the curved facet with the concave curved portion.
16. The method of embodiment 15, wherein simulating the physical process by performing surface interactions between the one or more curved facets and the particles in one or more voxels adjacent the one or more curved facets reduces surface noise and improves an accuracy of a simulation around a curved surface; and
   wherein simulating the physical process by performing surface interactions between the one or more curved facets and the particles in one or more voxels adjacent the one or more curved facets reduces the computational complexity of simulating the physical process by reducing a total number of facets representing the one or more surfaces in the lattice structure as compared with simulating the physical process by performing surface interactions between the plurality of planar facets and the particles in one or more voxels adjacent the plurality of planar facets to represent the surface.
17. One or more non-transitory machine-readable storage devices storing instructions for digitally simulating a physical process in a three-dimensional computer-aided design (CAD) model of a simulation space, the instructions being executable by one or more processors, to cause performance of operations comprising:
   receiving a digital representation of a simulation space, the digital representation including a three-dimensional CAD model of the simulation space including a lattice structure represented as a plurality of voxels including particles, the simulation space comprising one or more surfaces sized and oriented independently of the voxels;
   determining a plurality of planar facets to represent the one or more surfaces of the simulation space in the lattice structure;
   determining one or more curved facets based on the plurality of planar facets; and
   simulating a physical process by performing surface interactions between the one or more curved facets and the particles in one or more voxels adjacent the one or more curved facets.
18. The one or more non-transitory machine-readable storage devices of embodiment 17, wherein the particles comprise state vectors, each state vector comprising a plurality of entries that correspond to particular momentum states of a plurality of possible momentum states; and
   wherein performing the surface interactions comprises:
   determining, for the one or more curved facets, an incoming momentum flux based on the state vectors of the particles; and
   determining, for the one or more curved facets, an outgoing momentum flux based on the incoming momentum flux.
19. The one or more non-transitory machine-readable storage devices of embodiment 18, wherein determining the outgoing momentum flux comprises:
   determining a zero skin friction portion to preserve a tangential momentum flux of the particles;
   determining a non-zero skin friction portion representing a surface momentum flux change of the particles based on particle interactions with the one or more curved facets; and
   determining a mass correction for the one or more curved facets to conserve mass in the physical process.
20. The one or more non-transitory machine-readable storage devices of embodiment 19, wherein determining the mass correction comprises:
   determining a first portion of the mass correction based on a flat portion of the one or more curved facets; and
   determining a second portion of the mass correction based on a curved portion of the one or more curved facets.

## Claims

1. A computer system for digitally simulating a physical process in a three-dimensional computer-aided design (CAD) model of a simulation space, the computer system comprising:
one or more processors; and
a memory including:
a mesh preparation engine for generating and storing a digital representation of a simulation space, the digital representation including a three-dimensional CAD model of the simulation space including a mesh represented as a plurality of voxels including particles, the simulation space comprising one or more surfaces sized and oriented independently of the voxels; and
a simulation engine for reading, from the mesh preparation engine, the digital representation of the simulation space including the mesh,
with the simulation engine storing instructions for simulating a physical process, the instructions, when executed by the one or more processors, cause the one or more processors to perform operations comprising:
reading, from the mesh preparation engine, the digital representation of the simulation space including the three-dimensional CAD model of the simulation space including the mesh;
determining a plurality of planar facets to represent the one or more surfaces of the simulation space in the mesh;
determining one or more curved facets in the mesh based on the plurality of planar facets in the mesh; and
digitally simulating a physical process by performing surface interactions between the one or more curved facets in the mesh and the particles in one or more voxels in the mesh adjacent the one or more curved facets in the mesh.

2. The computer system of claim 1, wherein the particles comprise state vectors, each state vector comprises a plurality of entries that correspond to particular momentum states of a plurality of possible momentum states.

3. The computer system of claim 2, wherein performing the surface interactions comprises:
determining, for the one or more curved facets, an incoming momentum flux based on the state vectors of the particles; and
determining, for the one or more curved facets, an outgoing momentum flux based on the incoming momentum flux.

4. The computer system of claim 3, wherein determining the outgoing momentum flux comprises:
determining a zero skin friction portion to preserve a tangential momentum flux of the particles; and
determining a non-zero skin friction portion representing a surface momentum flux change of the particles based on particle interactions with the one or more curved facets.

5. The computer system of claim 3, wherein determining the outgoing momentum flux comprises determining a mass correction for the one or more curved facets to conserve mass in the physical process.

6. The computer system of claim 5, wherein determining the mass correction comprises:
determining a first portion of the mass correction based on a flat portion of the one or more curved facets; and
determining a second portion of the mass correction based on a curved portion of the one or more curved facets.

7. The computer system of claim 6, wherein determining the second portion of the mass correction comprises determining particles advected from a curved facet with a concave curved portion to the curved facet with the concave curved portion.

8. The computer system of any preceding claim, wherein the instructions further comprise:
reading, from the memory, the plurality of planar facets representing the one or more surfaces of the simulation space in the mesh;
storing, in the memory, the one or more curved facets in the mesh determined based on the plurality of planar facets in the mesh; and
storing, in the memory, the results of a digital simulation of a physical process based on performing surface interactions between the one or more curved facets in the mesh and the particles in one or more voxels in the mesh adjacent the one or more curved facets in the mesh.

9. A method implemented by a data processing system for digitally simulating a physical process in a three-dimensional computer-aided design (CAD) model of a simulation space, the method comprising:
receiving, by a data processing system, a digital representation of a simulation space, the digital representation including a three-dimensional CAD model of the simulation space including a lattice structure represented as a plurality of voxels including particles, the simulation space comprising one or more surfaces sized and oriented independently of the voxels;
determining, by the data processing system, a plurality of planar facets to represent the one or more surfaces of the simulation space in the lattice structure;
determining, by the data processing system, one or more curved facets based on the plurality of planar facets; and
simulating, by the data processing system, a physical process by performing surface interactions between the one or more curved facets and the particles in one or more voxels adjacent the one or more curved facets.

10. The method of claim 9, wherein the particles comprise state vectors, each state vector comprising a plurality of entries that correspond to particular momentum states of a plurality of possible momentum states; and
wherein performing the surface interactions comprises:
determining, by the data processing system for the one or more curved facets, an incoming momentum flux based on the state vectors of the particles; and
determining, by the data processing system for the one or more curved facets, an outgoing momentum flux based on the incoming momentum flux.

11. The method of claim 10, wherein determining the outgoing momentum flux comprises:
determining, by the data processing system, a zero skin friction portion to preserve a tangential momentum flux of the particles;
determining, by the data processing system, a non-zero skin friction portion representing a surface momentum flux change of the particles based on particle interactions with the one or more curved facets; and
determining, by the data processing system, a mass correction for the one or more curved facets to conserve mass in the physical process.

12. The method of claim 11, wherein determining the mass correction comprises:
determining, by the data processing system, a first portion of the mass correction based on a flat portion of the one or more curved facets; and
determining, by the data processing system, a second portion of the mass correction based on a curved portion of the one or more curved facets.

13. The method of claim 12, wherein determining the second portion of the mass correction comprises determining, by the data processing system, particles advected from a curved facet with a concave curved portion to the curved facet with the concave curved portion.

14. The computer system of any one of claims 1 to 8 or the method of any one of claims 9 to 13, wherein simulating the physical process by performing surface interactions between the one or more curved facets and the particles in one or more voxels adjacent the one or more curved facets reduces surface noise and improves an accuracy of a simulation around a curved surface; and/or
wherein simulating the physical process by performing surface interactions between the one or more curved facets and the particles in one or more voxels adjacent the one or more curved facets reduces the computational complexity of simulating the physical process by reducing a total number of facets representing the one or more surfaces in the lattice structure as compared with simulating the physical process by performing surface interactions between the plurality of planar facets and the particles in one or more voxels adjacent the plurality of planar facets to represent the surface.

15. One or more non-transitory machine-readable storage devices storing instructions for digitally simulating a physical process in a three-dimensional computer-aided design (CAD) model of a simulation space, the instructions being executable by one or more processors, to cause performance of operations comprising the method of any one of claims 9 to 14.
